# FASCICULE DE BREVET EUROPEEN

(11) **EP 4 173 737 B1**
(45) Date de publication et mention de la délivrance du brevet: **14.08.2024**
(21) Numéro de dépôt: 22203751.7
(22) Date de dépôt: 26.10.2022
(51) Int. Cl.: B21D 47/01, B23P 15/00, B21K 23/00, B23C 3/00, B23D 23/00, B64C 1/06, E04C 3/07, B21B 1/092, B21D 5/01, B21D 53/92

(54) **PROCÉDÉ DE FABRICATION D'UNE PIÈCE MÉTALLIQUE**
VERFAHREN ZUR HERSTELLUNG EINES METALLISCHEN BAUTEILS
METHOD FOR PRODUCING A METAL COMPONENT

(30) Priorité: 28.10.2021 FR 2111471
(43) Date de publication de la demande: 03.05.2023
(73) Titulaire: Creuzet Aeronautique, 47200 Marmande (FR)
(72) Inventeur: VERGINE, Cyril, 47200 Fourques-sur-Garonne (FR); COSTEPLANE, Bernard, 47250 LABASTIDE CASTEL AMOUROUX (FR)
(74) Mandataire: Lavoix

(56) Documents cités:
- WO-A1-94/23890
- CN-A- 103 331 577
- JP-A- S60 240 303
- US-A- 966 952
- US-B1- 6 718 812

## Description

La présente invention concerne un procédé de fabrication d'une pièce métallique s'étendant dans une première direction et présentant une section comprenant un élément central et au moins un premier élément latéral s'étendant dans une deuxième direction, les première et deuxième directions étant différentes l'une de l'autre.

L'invention s'applique particulièrement aux éléments de structure, par exemple dans le domaine de l'aéronautique.

Des procédés de fabrication de telles pièces métalliques sont connus, par exemple du document US3713205. Cependant, ce procédé comporte une étape de soudage au niveau de la zone de jonction, ce qui induit potentiellement une moins bonne résistance mécanique de la pièce obtenue.

Le document WO94/23890A1, sur lequel se base le préambule de la revendication 1, décrit un procédé de fabrication d'un bord métallique,
dans lequel une ébauche métallique subit un enlèvement de matière pour former une ébauche de bord métallique, l'ébauche étant ensuite bridée et des surfaces de l'ébauche étant déformées à chaud pour fournir le bord métallique.

La présente invention a pour but de proposer un procédé amélioré d'une telle pièce métallique.

A cet effet, l'invention a pour objet un procédé de fabrication comprenant les caractéristiques de la revendication 1.

Suivant d'autres aspects avantageux de l'invention, le procédé comporte l'une ou plusieurs des caractéristiques suivantes, prises isolément ou suivant toutes les combinaisons techniquement possibles :
- le premier poinçon présente une section en V définie par un secteur angulaire délimité par une première et une deuxième surfaces planes sécantes en un sommet, le secteur angulaire présentant un angle α compris entre 10 et 160° ;
- le procédé de fabrication comprend au moins une deuxième déformation à chaud, la deuxième déformation utilisant au moins un deuxième poinçon, le au moins deuxième poinçon présentant un secteur angulaire supérieur au secteur angulaire du premier poinçon ;
- au moins un premier ou deuxième poinçon utilisé pendant une étape de déformation à chaud comprend trois secteurs angulaires, un secteur angulaire étant inférieur aux deux autres secteurs angulaires et disposé entre lesdits deux autres secteurs angulaires ;
- la matrice présente une surface d'appui plane, et au moins le deuxième poinçon présente un secteur angulaire sensiblement égal à 180° ;
- la matrice présente une surface d'appui non plane, et au moins un premier ou deuxième poinçon présente un secteur angulaire sensiblement différent de 180° ;
- la pièce métallique est en alliage de titane, le chauffage étant effectué à une température comprise entre 600°C et 950°C, et préférentiellement proche de 900 °C ;
- la pièce métallique est en alliage d'aluminium, le chauffage étant effectué à une température comprise entre 400°C et 550°C, et préférentiellement entre 450°C et 480°C ;
- lors d'une étape de déformation à chaud, au moins l'un parmi le premier poinçon et la matrice est chauffée à une température inférieure d'au moins 50°C à une température de chauffage de l'ébauche ou d'une pièce intermédiaire ;
- le chauffage du premier poinçon et/ou de la matrice est effectué entre 350 et 450 °C.

L'invention se rapporte en outre à un procédé de fabrication d'une cornière métallique, comprenant les étapes suivantes : fourniture d'une pièce métallique en forme de T réalisée par un procédé tel que décrit ci-dessus ; puis découpe de ladite pièce métallique selon un plan traversant l'élément central, les premier et un deuxième éléments latéraux étant disposés de part et d'autre dudit plan.

L'invention se rapporte en outre à un procédé de fabrication d'une profilé métallique en forme de X, comprenant les étapes suivantes : fourniture d'une pièce métallique réalisée par un procédé tel que décrit ci-dessus, ladite pièce métallique présentant une section en Y ; puis une deuxième étape d'enlèvement de matière dans une extrémité libre de l'élément central de sorte à créer des troisième et quatrième éléments latéraux, puis au moins une étape de déformation à chaud des troisièmes et quatrièmes éléments latéraux, de sorte à obtenir une pièce métallique en forme de X.

L'invention sera mieux comprise à la lecture de la description qui va suivre, donnée uniquement à titre d'exemple non limitatif et faite en se référant aux dessins sur lesquels :
[Fig 1] la figure 1 est une vue en perspective d'une pièce métallique selon un premier mode de réalisation de l'invention ;
[Fig 2] la figure 2 est une représentation schématique d'un procédé de fabrication de la pièce métallique de la figure 1 ;
[Fig 3] la figure 3 est une représentation schématique d'un procédé de fabrication d'une pièce métallique selon un deuxième mode de réalisation de l'invention, à partir de la pièce métallique de la figure 1 ;
[Fig 4] la figure 4 est une représentation schématique d'un procédé de fabrication d'une pièce métallique selon un troisième mode de réalisation de l'invention, à partir d'une pièce métallique analogue à la pièce de la figure 1 ;
[Fig 5] la figure 5 est une représentation schématique d'un dispositif entrant dans un procédé de fabrication d'une pièce métallique selon un premier mode de réalisation de l'invention ; et
[Fig 6] la figure 6 est une représentation schématique d'un procédé de fabrication d'une pièce métallique selon un quatrième mode de réalisation de l'invention.

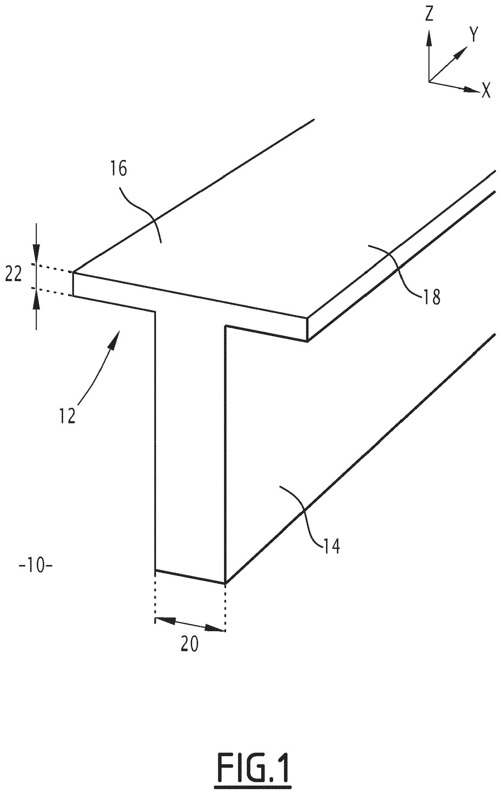

La figure 1 représente une pièce 10 métallique en forme de T obtenue selon un premier mode de réalisation de l'invention. Ladite pièce 10 est destinée à être utilisée en tant qu'élément de structure, par exemple dans un aéronef.

On considère une base orthonormée (X, Y, Z) associée à la pièce 10.

La pièce 10 s'étend dans une direction principale, correspondant à la direction Y. Comme visible sur la figure 1, la pièce 10 présente une section sensiblement en T perpendiculairement à ladite direction principale.

La pièce 10 comprend notamment une zone de jonction 12, un élément central 14 et un premier 16 et un deuxième 18 éléments latéraux.

L'élément central 14 s'étend dans une première direction transversale, correspondant à la direction Z, à partir de la zone de jonction 12. Les premier 16 et deuxième 18 éléments latéraux s'étendent à l'opposé l'un de l'autre dans une deuxième direction transversale, correspondant à la direction X, à partir de ladite zone de jonction 12.

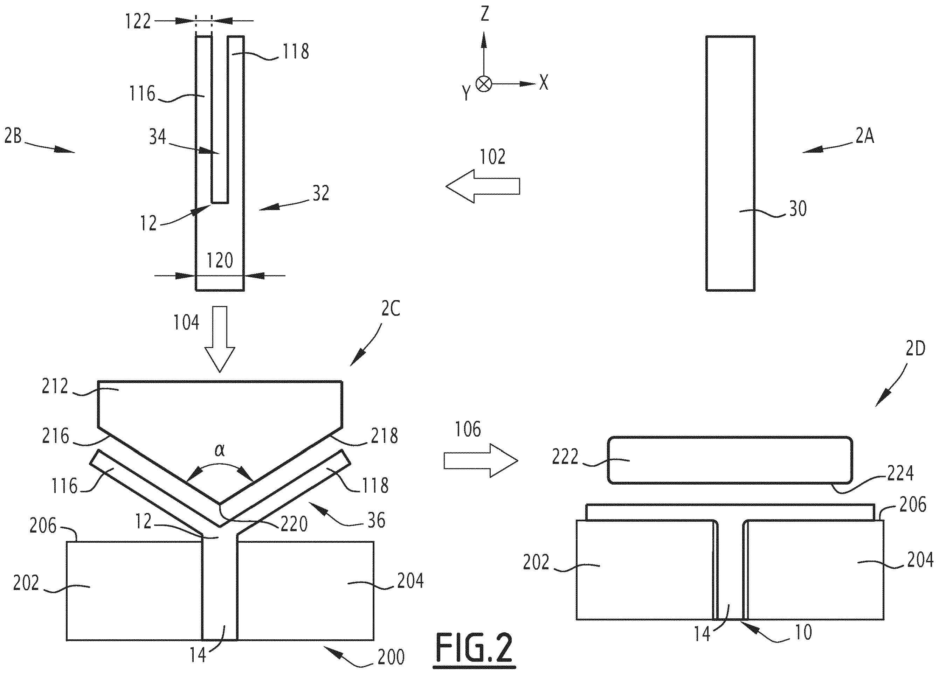

De préférence, la pièce 10 est sensiblement symétrique par rapport à un plan (Y, Z) 19 (figure 2) passant par l'élément central 14, les premier 16 et deuxième 18 éléments latéraux étant images l'un de l'autre par rapport audit plan.

Dans le mode de réalisation représenté, les premier 16 et deuxième 18 éléments latéraux présentent des épaisseurs comparables. Dans le mode de réalisation de la figure 1, une épaisseur 20 selon X de l'élément central 14 est sensiblement égale à trois fois l'épaisseur 22 selon Z de chacun des premier 16 et deuxième 18 éléments latéraux. En variante, un ratio entre l'épaisseur 20 et l'épaisseur 22 est compris entre 1 et 3.

De préférence, la pièce 10 est réalisée en titane ou en alliage de titane de type Ti-6AI-4V. En variante, la pièce 10 est réalisée dans un autre métal tel que l'acier ou l'aluminium, un superalliage ou un alliage d'acier ou d'aluminium.

La figure 2 représente schématiquement un procédé 100 de réalisation de la pièce 10 décrite ci-dessus, selon un mode de réalisation de l'invention.

Une première étape dudit procédé est la fourniture d'une ébauche 30 métallique (vue 2A de la figure 2). Ladite ébauche 30 s'étend dans la direction principale Y.

L'ébauche 30 présente une forme sensiblement parallélépipédique, une section de ladite ébauche perpendiculairement à Y ayant de préférence une forme rectangulaire.

A l'étape 102 suivante (vue 2B de la figure 2), l'ébauche 30 métallique est fendue, de sorte à former une première pièce intermédiaire 32. La fente ainsi formée s'étend dans la direction principale Y.

Plus précisément, la première pièce intermédiaire 32 comprend la zone de jonction 12, l'élément central 14 et un premier 116 et un deuxième 118 éléments latéraux intermédiaires, destinés à former les premier 16 et deuxième 18 éléments latéraux de la pièce 10.

Dans la première pièce intermédiaire 32, les premier 116 et deuxième 118 éléments latéraux intermédiaires s'étendent sensiblement dans la première direction transversale Z à partir de la zone de jonction 12, à l'opposé de l'élément central 14. Un espace 34 est ménagé par enlèvement de matière entre lesdits premier 116 et deuxième 118 éléments latéraux intermédiaires.

De préférence, l'étape d'enlèvement de matière est réalisée à l'aide d'une fraiseuse à commande numérique. En variante, l'étape d'enlèvement de matière est réalisée par électroérosion.

L'étape d'enlèvement de matière de l'ébauche 30 métallique permet de définir une épaisseur 120 de l'élément central 14 et une épaisseur 122 des premier 116 et deuxième 118 éléments latéraux. De préférence, l'épaisseur 120 est environ trois fois supérieure à l'épaisseur 122. Lesdites épaisseurs 120,122 sont de préférence légèrement supérieures aux épaisseurs 20 et 22 correspondantes, afin de compenser des variations d'épaisseurs liées aux étapes suivantes du procédé, décrites ci-après.

A l'étape 104 suivante (vue 2C de la figure 2), la première pièce intermédiaire 32 subit un premier chauffage au four, à une température préférentiellement de l'ordre de 900°C pour un alliage de titane, et en tout état de cause, inférieure à la température de béta-transus de l'alliage de titane considéré.

Le chauffage est suivi d'une insertion de l'élément central 14 de la première pièce intermédiaire 32 dans une matrice 200. Ladite matrice comprend deux éléments 202 et 204 mobiles, aptes à venir serrer entre eux l'élément central 14. De préférence, les éléments 202 et 204 mobiles sont configurés pour permettre le serrage de l'élément central 14 sans serrer la zone de jonction 12 ni les premier 116 et deuxième 118 éléments latéraux, les extrémités desdits éléments latéraux étant laissées libres.

Dans cet exemple, les deux éléments 202 et 204 définissent une surface d'appui 206 sensiblement plane. Lorsque l'élément central 14 est disposé entre les éléments 202 et 204, la surface d'appui 206 est disposée dans un plan (X, Y) selon la base orthonormée associée à la pièce métallique.

Lorsque l'élément central 14 de la première pièce intermédiaire 32 est inséré entre les éléments 202 et 204 et serré, la zone de jonction 12 est disposée au-dessus de la surface d'appui 206 pour que les éléments latéraux 116, 118 puissent se déformer sur toute leur longueur jusqu'à venir en appui sur la surface d'appui 206.

L'élément central 14 de la première pièce intermédiaire 32 chauffée étant maintenu dans une position de blocage par les deux éléments 202, 204, un premier poinçon 212 est inséré entre les premier 116 et deuxième 118 éléments latéraux intermédiaires, de sorte à les écarter l'un de l'autre dans un plan (X, Z).

Le premier poinçon 212 présente de préférence un profil en V. Plus précisément, le premier poinçon comporte une première 216 et une deuxième 218 surfaces sensiblement planes. Les surfaces 216 et 218 sont sécantes en une arête 220 disposée selon Y et définissent un secteur angulaire d'angle α. Les surfaces 216 et 218 sont destinées à entrer en contact respectivement avec le premier 116 et avec le deuxième 118 élément latéral intermédiaire. Les première 216 et deuxième 218 surfaces sont dans cet exemple sensiblement symétriques par rapport à un plan (Y, Z) passant par l'arête 220. L'angle α est compris entre 10° et 160°.

Après refroidissement, une deuxième pièce intermédiaire 36, représentée sur la vue 2C de la figure 2, est obtenue. Les premier 116 et deuxième 118 éléments latéraux intermédiaires de ladite deuxième pièce intermédiaire 36 se déploient dans des directions différentes et divergentes l'une de l'autre.

A l'étape 106 suivante, la deuxième pièce intermédiaire 36 subit un deuxième chauffage au four, préférentiellement de l'ordre de 900°C pour un alliage de titane. Après chauffage, l'élément central 14 de ladite deuxième pièce intermédiaire 36 est à nouveau serré dans la matrice 200.

L'élément central 14 étant maintenu serré par les éléments 202 et 204, un deuxième poinçon 222 est appliquée sur les premier 116 et deuxième 118 éléments latéraux intermédiaires (vue 2D de la figure 2). Ce deuxième poinçon comporte une surface plane 224 qui est appliquée en vis-à-vis de la surface d'appui 206 de la matrice 200. Un effort est appliqué entre le deuxième poinçon 222 et la matrice 200. Par exemple, pour une pièce métallique en alliage de titane de 1 à 3 mètres de long, un effort d'environ 3300 tonnes est appliqué. Le deuxième poinçon peut être maintenu pendant quelques secondes ou quelques minutes sur les premier 116 et deuxième 118 éléments latéraux intermédiaires, contre la matrice 200, selon l'effort appliqué et la surface des éléments latéraux intermédiaires.

De préférence, durant cette deuxième déformation à chaud, la matrice 200 et le poinçon 222 sont chauffés à une température comprise entre 350°C et 450°C et plus préférentiellement de l'ordre de 400°C.

L'étape de déformation à chaud peut être répétée plusieurs fois, avec des poinçons identiques ou différents, présentant préférentiellement des secteurs angulaires de plus en plus grand.

En particulier, selon un mode de réalisation, l'étape 106 est répétée une deuxième fois avec le même deuxième poinçon 222, afin d'assurer la coplanarité des premier 116 et deuxième 118 éléments latéraux, notamment après refroidissement de la deuxième pièce intermédiaire 36. Les températures de chauffage de chaque pièce intermédiaire, de chaque poinçon et de la matrice peuvent être identiques à ou différentes de celles de l'étape précédente.

Dans un autre mode de réalisation, l'étape 106 est réalisée avec un poinçon ayant un profil en V présentant un secteur angulaire plus grand que le premier poinçon 212 utilisé pour la première étape de déformation 104.

L'étape de déformation à chaud peut ainsi être répétée plusieurs fois, avec des poinçons identiques et/ou différents, le secteur angulaire du poinçon progressant d'un angle aigu à un angle obtus.

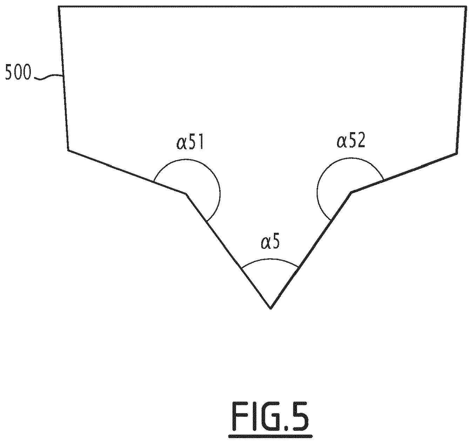

En variante, au moins un poinçon 500 présente un profil en V dit 'cassé', comprenant trois secteurs angulaires, nommément un secteur angulaire central α₅ et deux secteurs angulaires latéraux α₅₁ et α₅₂, le secteur angulaire central α₅ étant inférieur aux deux secteurs angulaires latéraux et disposé entre lesdits secteurs angulaires latéraux α₅₁ et α₅₂. Un tel poinçon est représenté en figure 5. Dans un mode de réalisation, le secteur angulaire central α₅ est supérieur à 10° et inférieur aux secteurs angulaires latéraux α₅₁ et α₅₂. Préférentiellement, les secteurs angulaires latéraux α₅₁ et α₅₂ sont supérieurs ou égaux à 100° et inférieurs ou égaux à 160°.

Dans l'exemple décrit, la surface d'appui 206 de la matrice 200 est plane, et le profil du poinçon varie d'un profil en V présentant un secteur angulaire aigu à un profil plan présentant un secteur angulaire de 180°. En variante, la surface d'appui de la matrice présente un profil en V aigu ou obtus. Les secteurs angulaires du ou des poinçons doivent bien sûr être adaptés en conséquence.

Après refroidissement, la pièce 10 métallique décrite ci-dessus est obtenue.

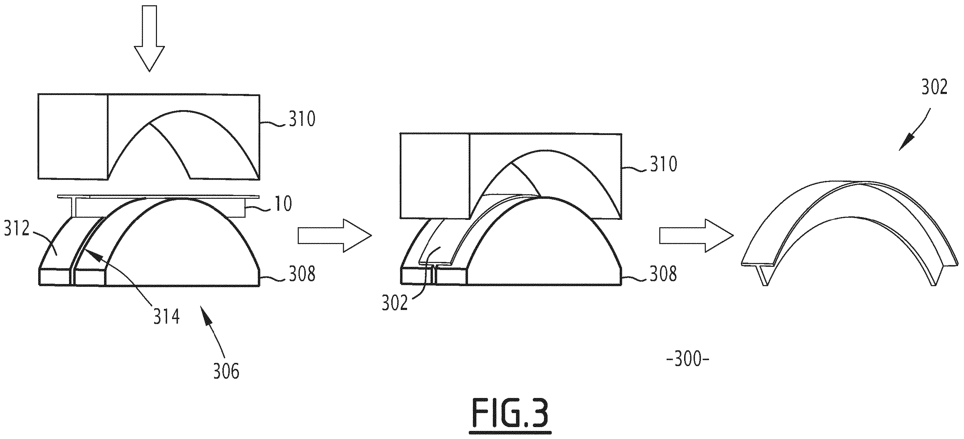

La figure 3 représente schématiquement un procédé 300 de réalisation d'une pièce 302 cintrée selon un deuxième mode de réalisation de l'invention, à partir de la pièce 10 décrite ci-dessus.

Le procédé 300 met en oeuvre un outil 306 de cintrage. Ledit outil de cintrage comporte un élément de support 308 et un élément de presse 310.

L'élément de support 308 comporte une surface supérieure 312 et une fente 314 ménagée dans ladite surface supérieure.

La surface supérieure 312 a une forme de portion de cylindre de base circulaire. La fente 314 décrit une trajectoire en arc de cercle, un rayon dudit cercle correspondant à la courbure recherchée pour la pièce 302 cintrée. En variante, la surface supérieure 312 a une forme courbe de base non circulaire, par exemple une base de courbe formée d'une succession de rayons et/ou de plats.

De part et d'autre de la fente 314, les parois de l'élément de support 308 sont mobiles en direction l'une de l'autre.

L'élément de presse 310 présente une surface concave sensiblement complémentaire à la surface supérieure 312 de l'élément de support.

A la première étape du procédé 300, la pièce 10 métallique subit un premier chauffage au four, à une température préférentiellement de l'ordre de 900°C pour un alliage de titane.

Après le chauffage, la pièce 10 est transférée dans l'outil de cintrage 306. Plus précisément, l'élément central 14 de la pièce 10 est glissé dans la fente 314 et serré entre les parois de l'élément de support 308. En outre, la pièce 10 chaude est éventuellement maintenue dans l'élément de support 308 au moyen de brides (non représentées). D'autres moyens de maintien peuvent être utilisés.

L'élément de presse 310 est ensuite abaissé en direction de l'élément de support 308 de façon à cintrer la pièce 10, avec une vitesse comprise entre 1 et 20 mm/s.

L'élément de presse 310 peut être maintenu sur l'élément de support 308 pendant une durée comprise entre 10 secondes et 30 minutes. A la fin de l'étape de cintrage, l'élément de presse 310 est relevé et le profilé cintré 302 obtenu est sorti de l'élément de support 308.

Une étape de détensionnement peut être réalisée pour relâcher les contraintes résiduelles induites par les étapes de déformations précédentes, en réalisant un traitement thermique sur la pièce cintrée 302.

Une étape finale d'usinage peut être réalisée pour amener la pièce cintrée 302 aux dimensions désirées.

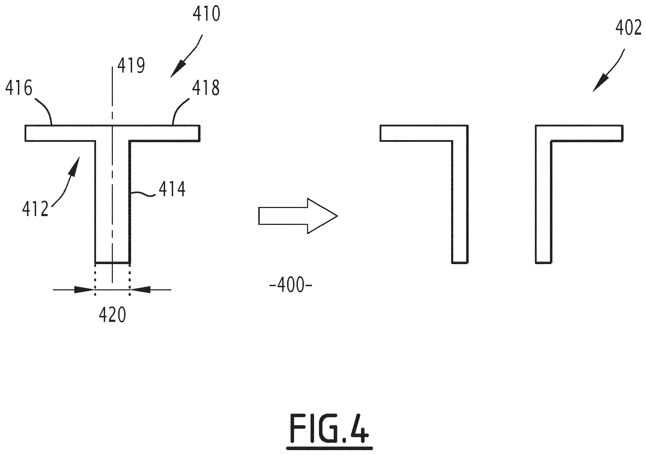

La figure 4 représente schématiquement un procédé 400 de réalisation de cornières 402 selon un troisième mode de réalisation de l'invention.

Le procédé 400 comporte la réalisation d'une pièce 410 métallique à section en T, analogue à la pièce 10 métallique décrite ci-dessus. La pièce 410 s'étend selon la direction principale Y et comprend notamment une zone de jonction 412, un élément central 414 et un premier 416 et un deuxième 418 éléments latéraux. La pièce 410 est réalisée selon le procédé 100 décrit ci-dessus.

Le procédé 400 comporte ensuite une étape de découpe de la pièce 410 selon un plan de symétrie 419 de ladite pièce, traversant l'élément central 414. Les premier 416 et un deuxième 418 éléments latéraux sont disposés de part et d'autre dudit plan.

Deux cornières 402 sensiblement identiques sont obtenues, chacune des deux cornières présentant une section en L perpendiculairement à la direction principale.

Une différence entre la pièce 410 de la figure 4 et la pièce 10 de la figure 1 est que l'épaisseur 420 de l'élément central 414 est définie en considérant que ladite pièce 410 est découpée selon le plan de symétrie 419. Ladite épaisseur 420 est donc choisie en fonction des dimensions souhaitées pour les cornières 402.

Selon des variantes de réalisation de l'invention, des procédés analogues aux procédés décrits ci-dessus sont utilisés pour fabriquer des pièces métalliques à section en Y ou en X.

Pour fabriquer une pièce en Y, le procédé décrit ci-dessous pour former une pièce en T est utilisé, mais aucun poinçon ne présente de secteur angulaire de 180°. La matrice peut présenter une surface d'appui plane ou non plane, par exemple en forme de V correspondant au secteur angulaire entre les deux éléments latéraux, la ou les étapes de déformation à chaud s'effectuant avec au moins un poinçon présentant un secteur angulaire sensiblement différent de 180°. La pièce en Y est par exemple analogue à la deuxième pièce intermédiaire 36, représentée sur la vue 2C de la figure 2.

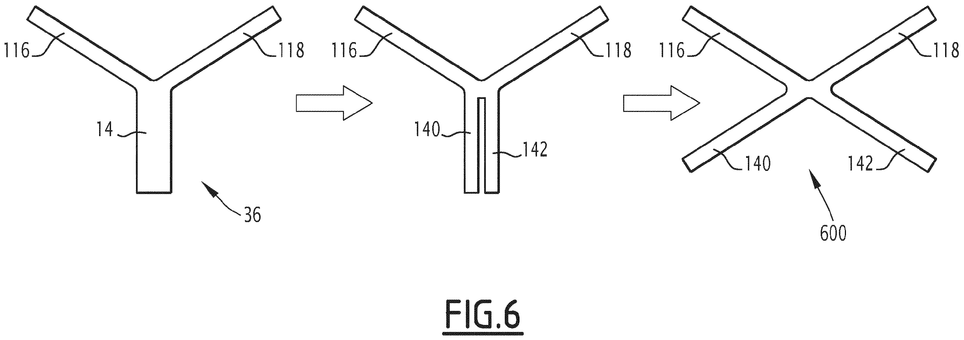

Un procédé pour fabriquer une pièce 600 en X est schématiquement représenté à la figure 6. Ledit procédé comporte la réalisation d'une deuxième pièce intermédiaire 36 en Y, telle que décrite ci-dessus, puis une deuxième étape d'enlèvement de matière réalisée dans l'extrémité libre de l'élément central 14 de ladite pièce. Des troisièmes 140 et quatrièmes 142 éléments latéraux sont ainsi formés.

Une ou plusieurs étapes de déformation à chaud sont ensuite réalisées pour déformer en V les troisièmes 140 et quatrièmes 142 éléments latéraux, préférentiellement en bloquant les premiers 116 et deuxièmes 118 éléments latéraux dans une matrice de forme adaptée.

En alternative, l'ébauche métallique 30 de section rectangulaire, visible à la figure 2, peut être fendue à chaque extrémité, avant que les éléments latéraux de chaque extrémité soient déformés tour à tour de sorte à former un profil en X.

En alternative, la pièce métallique peut être ultérieurement découpée dans le plan (X, Z) en tranches pour fournir une pièce semi-finie. L'épaisseur de la pièce semi-finie dans la direction Y peut être comprise entre quelques centimètres, et deux mètres. La pièce semi-finie peut ultérieurement être matricée et / ou usinée pour obtenir une pièce finie, comme par exemple, un compas de train d'atterrissage en forme de Y, une charnière en forme de C, une bride en forme de L, un té structural ou un té de jonction en forme de T.

Par exemple, le procédé pour fabriquer pièce finie comme un compas de train d'atterrissage comprend les étapes suivantes : fabrication d'une pièce métallique en Y comme décrit précédemment ; puis une étape de découpe en tranches de la pièce métallique en Y de sorte à obtenir au moins une pièce semi-finie présentant une section en Y ; puis une étape de matriçage ou d'usinage de la pièce semi-finie de sorte à obtenir le compas d'atterrissage métallique.

La méthode de l'invention présente un gain matière important par rapport au procédé d'usinage taillé-masse.

La méthode de l'invention nécessite moins de puissance qu'une presse de forge.

## Revendications

1. Procédé (100) de fabrication d'une pièce (10, 36, 410) métallique, ladite pièce s'étendant dans une première direction (Y) et présentant une section comprenant un élément central (14) et au moins un premier élément latéral (16) s'étendant dans une deuxième direction, les première et deuxième directions étant différentes l'une de l'autre;
le procédé comprenant les étapes suivantes :
- fourniture d'une ébauche (30) métallique de section sensiblement rectangulaire, ladite ébauche s'étendant dans la première direction;
- au moins une étape d'enlèvement de matière (102) de l'ébauche métallique, de sorte à former une pièce intermédiaire (32) comprenant l'élément central (14), s'étendant dans la première direction ; une zone de jonction (12) et au moins un premier (116) et un deuxième (118) éléments latéraux intermédiaires, s'étendant parallèlement sensiblement dans la première direction à partir de ladite zone de jonction, à l'opposé de l'élément central intermédiaire ; un espace (34) étant ménagé entre les premier et deuxième éléments latéraux intermédiaires;
- au moins une première déformation à chaud (104) de la pièce intermédiaire, ladite première déformation comprenant un chauffage de la pièce intermédiaire (32),
le procédé étant **caractérisé en ce qu'**il comprend ensuite les étapes suivantes :
- Une étape de serrage de l'élément central (14) entre deux éléments (202, 204) mobiles d'une matrice, perpendiculairement à la première direction, la zone de jonction et les premier et deuxième éléments latéraux intermédiaires (116, 118) étant alors disposés au-dessus desdits éléments (202, 204) de la matrice ; puis
- une étape d'écartement des premier et deuxième éléments latéraux intermédiaires (116, 118) par insertion d'un premier poinçon (212) entre lesdits premier et deuxième éléments, l'élément central (14) étant serré dans la matrice durant l'insertion du premier poinçon.

2. Procédé de fabrication selon la revendication 1, dans lequel le premier poinçon (212) présente une section en V définie par un secteur angulaire délimité par une première (216) et une deuxième (218) surfaces planes sécantes en un sommet, le secteur angulaire présentant un angle (α) compris entre 10 et 160°.

3. Procédé de fabrication selon la revendication 1, comprenant au moins une deuxième déformation à chaud, la deuxième déformation utilisant au moins un deuxième poinçon (222, 500), le au moins deuxième poinçon présentant un secteur angulaire supérieur au secteur angulaire du premier poinçon.

4. Procédé de fabrication selon l'une des revendications 1 à 3, dans lequel au moins un premier ou deuxième poinçon (500) utilisé pendant une étape de déformation à chaud comprend trois secteurs angulaires, un secteur angulaire étant inférieur aux deux autres secteurs angulaires et disposé entre lesdits deux autres secteurs angulaires.

5. Procédé de fabrication selon la revendication 3, dans lequel la matrice présente une surface d'appui (206) plane, et au moins le deuxième poinçon (222) présente un secteur angulaire sensiblement égal à 180°.

6. Procédé de fabrication selon la revendication 3, dans lequel la matrice (200) présente une surface d'appui non plane, et au moins un premier ou deuxième poinçon présente un secteur angulaire sensiblement différent de 180°.

7. Procédé de fabrication selon la revendication 1, dans lequel la pièce métallique (10) est en alliage de titane, le chauffage étant effectué à une température comprise entre 600°C et 950°C, et préférentiellement proche de 900 °C.

8. Procédé de fabrication selon la revendication 1, dans lequel la pièce métallique (10) est en alliage d'aluminium, le chauffage étant effectué à une température comprise entre 400°C et 550°C, et préférentiellement entre 450°C et 480°C.

9. Procédé de fabrication selon l'une des revendications précédentes, dans lequel, lors d'une étape de déformation à chaud, au moins l'un parmi le premier poinçon et la matrice (200) est chauffée à une température inférieure d'au moins 50°C à une température de chauffage de l'ébauche ou d'une pièce intermédiaire.

10. Procédé de fabrication selon la revendication 9, dans lequel le chauffage du premier poinçon et/ou de la matrice (200) est effectué entre 350 et 450 °C.

11. Procédé (400) de fabrication d'une pièce métallique (402) en forme de L, comprenant les étapes suivantes : fabrication d'une pièce métallique (410) en forme de T par un procédé selon l'une des revendications précédentes ; puis découpe de ladite pièce métallique selon un plan (419) traversant l'élément central, les premier (416) et un deuxième (418) éléments latéraux étant disposés de part et d'autre dudit plan.

12. Procédé de fabrication d'une pièce métallique (600) en forme de X, comprenant les étapes suivantes : fabrication d'une pièce métallique (36) par un procédé selon l'une des revendications 1 à 10, ladite pièce métallique présentant une section en Y ; puis une deuxième étape d'enlèvement de matière dans une extrémité libre de l'élément central de sorte à créer des troisième (140) et quatrième (142) éléments latéraux, puis au moins une étape de déformation à chaud des troisièmes et quatrièmes éléments latéraux, de sorte à obtenir une pièce métallique en forme de X.

13. Procédé de fabrication d'une pièce finie en forme de T, de Y, de L ou de X comprenant les étapes suivantes : fabrication d'une pièce métallique par un procédé selon l'une des revendications 1 à 12, ladite pièce métallique présentant une section en T, Y, L ou X ; puis une étape de découpe en tranches de la pièce métallique dans la première direction (Y) de sorte à obtenir une pièce semi-finie en forme de T, Y, L ou X; puis une étape de matriçage ou d'usinage de la pièce semi-finie de sorte à obtenir la pièce finie.

## Patentansprüche

1. Verfahren (100) zur Herstellung eines metallischen Werkstücks (10, 36, 410), wobei sich das Werkstück in eine erste Richtung (Y) erstreckt und einen Querschnitt aufweist, umfassend ein mittleres Element (14) und mindestens ein erstes seitliches Element (16), das sich in eine zweiten Richtung erstreckt, wobei die erste und die zweite Richtung voneinander verschieden sind;
das Verfahren umfassend die folgenden Schritte:
- Bereitstellen eines metallischen Rohlings (30) mit im Wesentlichen rechteckigem Querschnitt, wobei sich der Rohling in die erste Richtung erstreckt;
- mindestens einen Schritt des Abtragens von Material (102) von dem metallischen Rohling, um ein Zwischenstück (32) zu bilden, umfassend das mittlere Element (14), das sich in die erste Richtung erstreckt; einen Verbindungsbereich (12) und mindestens ein erstes (116) und ein zweites (118) seitliches Zwischenelement, die sich von dem Verbindungsbereich gegenüber dem mittleren Zwischenelement parallel im Wesentlichen in die erste Richtung erstrecken, wobei ein Raum (34) zwischen dem ersten und dem zweiten seitlichen Zwischenelement ausgebildet ist;
- mindestens eine erste Warmverformung (104) des Zwischenstücks, die erste Verformung umfassend ein Erhitzen des Zwischenstücks (32),
wobei das Verfahren **dadurch gekennzeichnet ist, dass** es danach die folgenden Schritte umfasst:
- einen Schritt eines Einspannens des mittleren Elements (14) zwischen zwei beweglichen Elementen (202, 204) einer Matrize senkrecht zu der ersten Richtung, wobei der Verbindungsbereich und das erste und zweite seitliche Zwischenelement (116, 118) dann über den genannten Elementen (202, 204) der Matrize angeordnet sind; dann
- einen Schritt eines Beabstandens des ersten und des zweiten seitlichen Zwischenelements (116, 118) durch Einführen eines ersten Stempels (212) zwischen dem ersten und zweiten Element, wobei das mittlere Element (14) während des Einführens des ersten Stempels in der Matrize eingespannt wird.

2. Herstellungsverfahren nach Anspruch 1, wobei der erste Stempel (212) einen V-förmigen Querschnitt aufweist, der durch einen Winkelsektor definiert ist, der durch eine erste (216) und eine zweite (218) ebene Fläche begrenzt ist, die sich in einem Scheitelpunkt schneiden, wobei der Winkelsektor einen Winkel (α) zwischen 10 und 160° aufweist.

3. Herstellungsverfahren nach Anspruch 1, umfassend mindestens eine zweite Warmumformung, wobei die zweite Umformung mindestens einen zweiten Stempel (222, 500) verwendet, wobei der mindestens zweite Stempel einen Winkelsektor aufweist, der größer ist als der Winkelsektor des ersten Stempels.

4. Herstellungsverfahren nach einem der Ansprüche 1 bis 3, wobei mindestens ein erster oder zweiter Stempel (500), der während eines Warmumformungsschritts verwendet wird, drei Winkelsektoren umfasst, wobei ein Winkelsektor kleiner ist als die zwei anderen Winkelsektoren und zwischen den zwei anderen Winkelsektoren angeordnet ist.

5. Herstellungsverfahren nach Anspruch 3, wobei die Matrize eine ebene Auflagefläche (206) aufweist und mindestens der zweite Stempel (222) einen Winkelsektor von im Wesentlichen 180° aufweist.

6. Herstellungsverfahren nach Anspruch 3, wobei die Matrize (200) eine nicht ebene Auflagefläche aufweist und mindestens ein erster oder zweiter Stempel einen Winkelsektor aufweist, der sich im Wesentlichen von 180° unterscheidet.

7. Herstellungsverfahren nach Anspruch 1, wobei das metallische Werkstück (10) aus einer Titanlegierung ist, wobei das Erhitzen auf eine Temperatur zwischen 600 °C und 950 °C, vorzugsweise nahe 900 °C, erfolgt.

8. Herstellungsverfahren nach Anspruch 1, wobei das metallische Werkstück (10) aus einer Aluminiumlegierung ist, wobei das Erhitzen auf eine Temperatur zwischen 400 °C und 550 °C und vorzugsweise zwischen 450 °C und 480 °C erfolgt.

9. Herstellungsverfahren nach einem der vorherigen Ansprüche, wobei in einem Warmumformungsschritt mindestens einer von dem ersten Stempel und der Matrize (200) auf eine Temperatur erhitzt wird, die mindestens 50 °C niedriger ist als eine Erhitzungstemperatur des Rohlings oder eines Zwischenstücks.

10. Herstellungsverfahren nach Anspruch 9, wobei das Erhitzen des ersten Stempels und/oder der Matrize (200) auf 350 bis 450 °C erfolgt.

11. Verfahren (400) zur Herstellung eines L-förmigen metallischen Werkstücks (402),
umfassend die folgenden Schritten: Herstellen
eines T-förmigen metallischen Werkstücks (410)
durch ein Verfahren nach einem der vorherigen Ansprüche; dann Schneiden des metallischen Werkstücks entlang einer Ebene (419), die durch das mittlere Element verläuft, wobei das erste (416) und ein zweites (418) seitliches Element auf beiden Seiten der Ebene angeordnet sind.

12. Verfahren zur Herstellung eines X-förmigen metallischen Werkstücks (600),
umfassend die folgenden Schritten: Herstellen
eines metallischen Werkstücks (36) durch ein
Verfahren nach einem der Ansprüche 1 bis 10, wobei das metallische Werkstück einen Y-förmigen Querschnitt aufweist; dann einen zweiten Schritt des Abtragens von Material in einem freien Ende des mittleren Elements, sodass ein drittes (140) und ein viertes (142) seitliches Element geschaffen wird, und dann mindestens einen Schritt eines Warmverformens des dritten und des vierten seitlichen Elements, sodass ein X-förmiges metallisches Werkstück erlangt wird.

13. Verfahren zur Herstellung eines T-, Y-, L- oder
X-förmigen Fertigteils, umfassend die folgenden Schritte: Herstellen eines metallischen Werkstücks durch ein
Verfahren nach einem der Ansprüche 1 bis 12, wobei das metallische Werkstück einen T-, Y-, L- oder X-förmigen Querschnitt aufweist; dann einen Schritt eines Schneidens des metallischen Werkstücks in Scheiben in die erste Richtung (Y), um ein T-, Y-, L- oder X-förmiges Halbfertigteil zu erlangen; dann einen Schritt eines Prägens oder Bearbeitens des Halbfertigteils, um das Fertigteil zu erlangen.

## Claims

1. A method (100) of manufacturing a metal part (10, 36, 410), said part extending in a first direction (Y) and having a cross-section comprising a central element (14) and at least a first side element (16) extending in a second direction, the first and second directions being different from each other;
the method comprising the following steps:
- providing a metal blank (30) of substantially rectangular cross-section, said blank extending in the first direction;
- at least one step of removing material (102) from the metal blank, so as to form an intermediate part (32) comprising the central element (14), extending in the first direction; a joining zone (12) and at least first (116) and second (118) intermediate lateral elements, extending in parallel substantially in the first direction from said joining zone, opposite the intermediate central element; a space (34) being provided between the first and second intermediate lateral elements;
- at least a first hot deformation (104) of the intermediate part, said first deformation comprising heating of the intermediate part (32),
the process being **characterised in that** it further comprises the following steps:
- A step of clamping the central element (14) between two movable elements (202, 204) of a die, perpendicularly to the first direction, the joining zone and the first and second intermediate lateral members (116, 118) then being arranged above the said members (202, 204) of the die; then
- a step of separating the first and second intermediate lateral members (116, 118) by inserting a first punch (212) between said first and second members, the central member (14) being clamped in the die during insertion of the first punch.

2. Manufacturing method according to claim 1, in which the first punch (212) has a V-shaped section defined by an angular sector delimited by a first (216) and a second (218) plane surface intersecting at an apex, the angular sector having an angle (α) of between 10 and 160°.

3. A manufacturing method according to claim 1, comprising at least one second hot deformation, the second deformation using at least one second punch (222, 500), the at least one second punch having an angular sector greater than the angular sector of the first punch.

4. A manufacturing method according to one of claims 1 to 3, wherein at least one first or second punch (500) used during a hot forming step comprises three angular sectors, one angular sector being smaller than the other two angular sectors and disposed between said other two angular sectors.

5. A manufacturing method according to claim 3, in which the die has a flat bearing surface (206), and at least the second punch (222) has an angular sector substantially equal to 180°.

6. A manufacturing method according to claim 3, in which the die (200) has a non-planar bearing surface, and at least one first or second punch has an angular sector substantially different from 180°.

7. A manufacturing method according to claim 1, in which the metal part (10) is made of titanium alloy, heating being carried out at a temperature of between 600 °C and 950 °C, and preferably close to 900 °C.

8. A manufacturing method according to claim 1, in which the metal part (10) is made of an aluminium alloy, the heating being carried out at a temperature of between 400 °C and 550 °C, and preferably between 450 °C and 480 °C.

9. A manufacturing method according to any of the preceding claims, wherein, during a hot deformation step, at least one of the first punch and the die (200) is heated to a temperature at least 50 °C lower than a heating temperature of the blank or an intermediate part.

10. A manufacturing method as claimed in claim 9, wherein the first punch and/or die (200) is heated to between 350 and 450 °C.

11. Process (400) for manufacturing an L-shaped metal part (402),
comprising the following stages: manufacture
of a T-shaped metal part (410)
by a process according to one of the preceding claims; then cutting the said metal part in a plane (419) passing through the central element, the first (416) and a second (418) lateral elements being arranged on either side of the said plane.

12. Method for manufacturing an X-shaped metal part (600),
comprising the following stages: manufacture
of a metal part (36) by means of a
method according to one of claims 1 to 10, the said metal part having a Y-shaped cross-section; then a second step of removing material from a free end of the central element so as to create third (140) and fourth (142) side elements, then at least one step of hot deformation of the third and fourth side elements, so as to obtain an X-shaped metal part.

13. A manufacturing method for a finished part in the shape of a T, Y, L or X comprising the following stages: manufacture
of a metal part by a
method according to one of claims 1 to 12, said metal part having a T, Y, L or X cross-section; then a step of slicing the metal part in the first direction (Y) so as to obtain a semi-finished part in the shape of T, Y, L or X; then a step of stamping or machining the semi-finished part so as to obtain the finished part.
